# FASCICULE DE BREVET EUROPEEN

(11) **EP 3 003 970 B1**
(45) Date de publication et mention de la délivrance du brevet: **25.04.2018**
(21) Numéro de dépôt: 14731744.0
(22) Date de dépôt: 28.05.2014
(51) Int. Cl.: C01B 3/04, C06D 5/06, C06B 45/30, C06D 5/04

(54) **OBTENTION D'UNE FORME SOLIDE RENFERMANT DU BORAZANE STABILISE THERMIQUEMENT; LADITE FORME SOLIDE ET SON UTILISATION POUR GENERER DE L'HYDROGENE**
HERSTELLUNG EINER FESTEN FORM MIT HITZESTABILEM BORAZAN, BESAGTE FESTE FORM UND VERWENDUNG ZUR ERZEUGUNG VON WASSERSTOFF
OBTAINING A SOLID FORM CONTAINING HEAT-STABLE BORAZANE, SAID SOLID FORM, AND THE USE THEREOF FOR GENERATING HYDROGEN

(30) Priorité: 30.05.2013 FR 1301229
(43) Date de publication de la demande: 13.04.2016
(73) Titulaire: ARIANEGROUP SAS, 75015 Paris (FR); Centre National de la Recherche Scientifique (C.N.R.S.), 75016 Paris (FR)
(72) Inventeur: BLANCHARD, Hélène, 33600 Pessac (FR); RENOUARD, Joël A., 77630 Saint Martin En Biere (FR); DARWICHE, Ali, J4K0B2 Longueuil Québec (CA); JANOT, Raphaël L., 80260 Coisy (FR)
(74) Mandataire: Le Roux, Martine
(86) Numéro de dépôt international: PCT/FR2014/051258
(87) Numéro de publication internationale: WO 2014/191682

(56) Documents cités:
- WO-A1-2009/138629
- FR-A1- 2 834 710
- UMIT B. DEMIRCI ET AL: "Sodium borohydride versus ammonia borane, in hydrogen storage and direct fuel cell applications", ENERGY & ENVIRONMENTAL SCIENCE, vol. 2, no. 6, 2009, page 627, XP055104459, ISSN: 1754-5692, DOI: 10.1039/b900595a cité dans la demande
- CHRISTIAN RELLER ET AL: "A Self-Contained Regeneration Scheme for Spent Ammonia Borane Based on the Catalytic Hydrodechlorination of BCl 3", ANGEWANDTE CHEMIE INTERNATIONAL EDITION, vol. 51, no. 47, 19 novembre 2012 (2012-11-19), pages 11731-11735, XP055104506, ISSN: 1433-7851, DOI: 10.1002/anie.201201134 cité dans la demande
- DATABASE CA [Online] CHEMICAL ABSTRACTS SERVICE, COLUMBUS, OHIO, US; HUANG, YUEXIANG ET AL: "Film coated solid particles method", XP002720933, extrait de STN Database accession no. 2011:1551933 & CN 102 259 837 A (CHINA JILIANG UNIVERSITY, PEOP. REP. CHINA) 30 novembre 2011 (2011-11-30)

## Description

La présente invention a été développée en référence au problème technique de la stabilité thermique du borazane.

La présente invention a plus particulièrement pour objet :
- un procédé d'obtention d'une forme solide renfermant du borazane stabilisé thermiquement, ladite forme solide étant apte à générer de l'hydrogène par décomposition thermique ou par une réaction de combustion auto-entretenue,
- ladite forme solide renfermant du borazane stabilisé thermiquement, et
- un procédé de génération d'hydrogène comprenant la décomposition thermique ou la combustion auto-entretenue de ladite forme solide renfermant du borazane stabilisé thermiquement.

Au sein de ladite forme solide renfermant du borazane, ledit borazane est, selon l'invention, stabilisé thermiquement.

Le borazane (ou "ammonia borane"), composé répondant à la formule chimique NH₃BH₃, a été identifié comme un excellent candidat pour le stockage d'hydrogène. En effet, sa teneur massique en hydrogène de 19,6 % en fait une matière première de choix pour la génération d'hydrogène.

Son utilisation, comme générateur d'hydrogène, a été décrite, selon deux variantes.

Selon la première variante, conventionnelle, il est directement traité thermiquement (en l'absence d'oxygène, avec élévation de la température jusqu'à plus de 1300°C). Il libère alors rapidement de l'hydrogène, par décomposition thermique, selon 3 étapes successives : une première étape qui démarre vers 80-90°C, une seconde étape qui démarre vers 150-160°C et une troisième étape qui démarre à plus de 1300°C. Les valeurs de température indiquées ci-dessus pour le début des première et seconde étapes le sont à titre indicatif. Ces valeurs dépendent en effet de la pureté du produit et de la vitesse de montée en température. Ainsi est-il indiqué dans Energy Environmental Science, 2009, 2, 627-637, une température de décomposition du borazane de 78°C et reporté dans Angewandte Chemie International Edition, 2012, 51, 11731-11735 que le borazane commence à libérer de l'hydrogène à 95°C.

Selon la seconde variante, notamment décrite par la Demanderesse dans la demande de brevet WO 2009/138629, il est utilisé après formulation avec au moins un oxydant inorganique. Il libère alors l'hydrogène selon une réaction de combustion (exothermique) auto-entretenue.

A ce jour toutefois, l'utilisation du borazane, tout particulièrement comme générateur d'hydrogène, est freinée du fait de son instabilité thermique. En effet, le composé borazane ne répond pas aux normes de stabilité thermique requises pour une utilisation grand public.

A l'appui de ces affirmations, la Demanderesse fournit des résultats d'analyses par thermogravimétrie et par calorimétrie différentielle à balayage (DSC). Les analyses ont été menées sous argon. Ainsi, les phénomènes de décomposition thermique observés ne sont-ils pas pollués par des phénomènes d'oxydation.

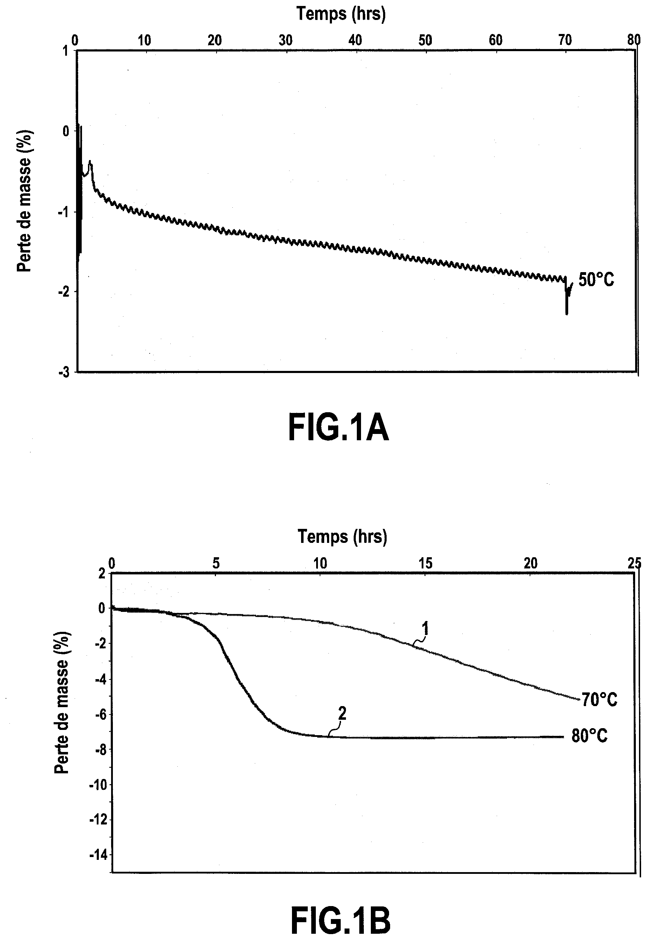

1) Les figures 1A et 1B, ainsi que le tableau 1 ci-après, montrent lesdits résultats d'analyse par thermogravimétrie. Un échantillon (100 mg) de poudre de borazane (diamètre médian (en masse) de 350 µm) a été chauffé sous argon à des températures données (respectivement de 50°C (figure 1A), 70°C (figure 1B, courbe 1), et 80°C (figure 1B, courbe 2 et tableau 1)). La perte de masse de l'échantillon testé a été suivie sur un temps t (de 70 heures à la température de 50°C (figure 1A), de plus de 20 heures aux températures de 70°C et 80°C (figure 1B et tableau 1)).
La décomposition est très lente à 50°C, elle est de 0,02 % par heure (figure 1A).
Elle devient significative à partir de 55°C.
Elle s'accélère lorsque la température atteint 70°C, 80°C (figure 1B). On remarque un début de perte de masse après 7 heures à 70°C et après 2 heures seulement à 80°C. On observe, plus précisément, à 80°C, la perte de masse indiquée dans le tableau 1 ci-après.

**Tableau 1**

| Temps (heure) | Perte de masse sous argon (%*) | Borazane décomposé (%) |
|---|---|---|
| 5 | 0,8 | 4 |
| 10 | 7 | 35 |
| 15 | 7 | 35 |
| 20 | 7 | 35 |

| | | |
|---|---|---|
| * le % de perte de masse correspond au pourcentage d'H₂ éliminé sur la quantité (théorique) de 19,6 % de départ. | | |

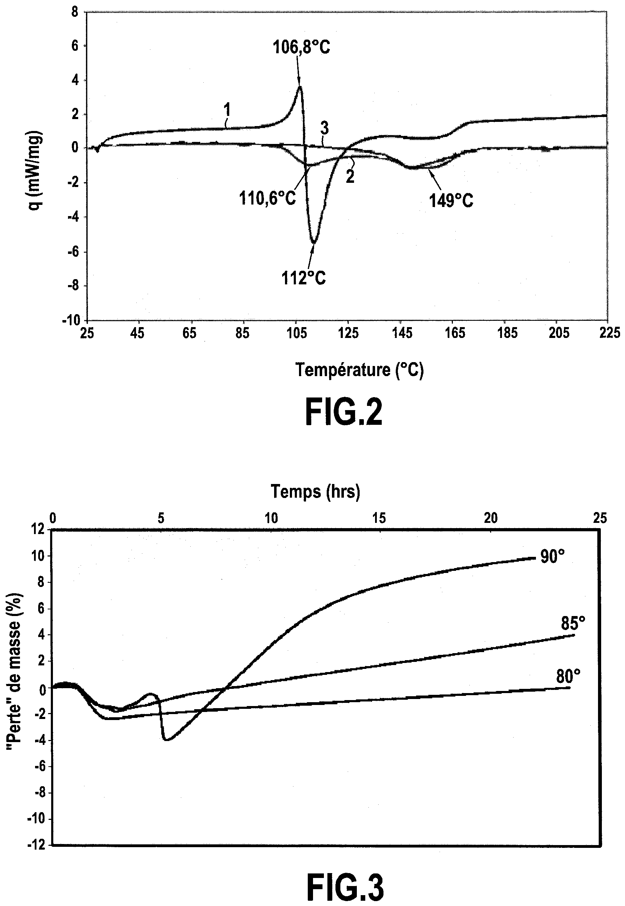

2) La figure 2 montre lesdits résultats d'analyse par calorimétrie différentielle à balayage (DSC). Ces résultats ont également été obtenus avec des échantillons de 100 mg de poudre (Ø médian (en masse) de 350 µm).

La courbe 1 a été obtenue avec le produit de référence : le borazane qui n'a pas subi de chauffage. Ladite courbe 1 montre un premier endotherme à 106,8°C (qui correspond à la fusion du borazane) et un premier exotherme de maximum à 112°C (qui correspond au début de la décomposition thermique du borazane avec élimination de la première mole d'hydrogène : xNH₃BH₃ → (NH₂BH₂)ₓ). Cette courbe 1 est conforme aux connaissances générales de l'homme du métier.

La courbe 2 a été obtenue avec la poudre de borazane préalablement chauffée sous argon à 70°C pendant 24 heures. Ladite courbe 2 montre encore un « faible » exotherme à 110,6°C. Un second exotherme a lieu à une température de 149°C (> 112°C), ce qui prouve que le borazane est déjà en partie décomposé.

La courbe 3 a été obtenue avec la poudre de borazane préalablement chauffée sous argon à 80°C pendant 24 heures. Sur ladite courbe 3, on observe plus la fusion. Seule, la deuxième décomposition à 149°C est encore visible.

A la considération des figures 1A, 1B et 2 annexées, des chiffres du tableau 1 ci-dessus ainsi que des commentaires ci-dessus, on comprend donc que le problème de la stabilité thermique du borazane est un réel problème technique.

Le borazane présente un premier pallier de décomposition thermique qui s'amorce à des températures basses. Il est ainsi susceptible de libérer intempestivement de l'hydrogène (avec formation conjointe de polyaminoborane). Ledit hydrogène ainsi libéré intempestivement n'est *a priori* pas valorisable et est, en tout état de cause, susceptible de poser de réels problèmes de sécurité.

La demande de brevet CN 102 259 837 décrit des particules de borazane comprimé, avec un revêtement de type résine (PE, PP, PET, PVA) ou de type film thermorétractable (PE, PP, PET). Lesdites particules, de fabrication simple et peu coûteuse, présentent une bonne fluidité, des propriétés intéressantes de stabilité dans un environnement de vapeur, une vitesse de production d'hydrogène stable...

En référence à ce problème technique de la stabilisation thermique du borazane, la Demanderesse propose présentement une solution. Elle propose de nouvelles formes solides renfermant du borazane, au sein desquelles ledit borazane est stabilisé thermiquement. Ces nouvelles formes solides sont susceptibles d'exister selon de nombreuses variantes, notamment avec ou sans oxydant inorganique dans leur composition. De façon caractéristique, le borazane présent en leur sein est protégé par une coquille d'oxyde, par une couche de borate. Ceci est expliqué en détail ci-après.

Selon son premier objet, la présente invention concerne donc un procédé d'obtention d'une forme solide renfermant du borazane stabilisé thermiquement, ladite forme solide étant apte à générer de l'hydrogène par décomposition thermique ou par une réaction de combustion auto-entretenue. Ledit procédé comprend :
- la mise à disposition d'au moins une forme solide de borazane choisi parmi les grains de poudre pulvérulente, les granulés, les pastilles, les blocs et leurs mélanges,
- le traitement thermique de ladite au moins une forme solide de borazane, sous air, à une température comprise entre 50 et 85°C, pendant au moins deux heures, de façon à constituer une couche oxydée à sa surface,
ladite au moins une forme solide de borazane traitée thermiquement constituant alors la forme solide renfermant du borazane stabilisé thermiquement, apte à générer de l'hydrogène par décomposition thermique, recherchée ;
et comprend, en outre, éventuellement :
- le mélange de ladite au moins une forme solide de borazane, choisie parmi les grains de poudre pulvérulente et/ou les granulés, traitée thermiquement, avec au moins un oxydant inorganique, se présentant sous la forme (de grains) d'une poudre pulvérulente et/ou de granulés, suivi éventuellement
- de la mise en forme dudit mélange pour l'obtention de pastilles et/ou blocs renfermant ladite au moins une forme solide de borazane traitée thermiquement et ledit au moins un oxydant,
ledit mélange, mis en forme ou non, renfermant ladite au moins une forme solide de borazane traitée thermiquement et ledit au moins un oxydant inorganique, constituant alors la forme solide renfermant du borazane stabilisé thermiquement, apte à générer de l'hydrogène par une réaction de combustion auto-entretenue, recherchée.

Exprimé sous une forme qui fait mieux ressortir les différentes variantes de mise en oeuvre du procédé de l'invention, ledit procédé comprend :
a) la mise à disposition d'au moins une forme solide de borazane choisi parmi les grains de poudre pulvérulente, les granulés, les pastilles, les blocs et leurs mélanges,
b) le traitement thermique de ladite au moins une forme solide de borazane, sous air, à une température comprise entre 50 et 85°C, pendant au moins deux heures, ledit traitement thermique générant une couche oxydée à sa surface ; ladite au moins une forme solide de borazane traitée thermiquement constituant alors une forme solide renfermant du borazane stabilisé thermiquement, apte à générer de l'hydrogène par décomposition thermique ; et
c1) la récupération de ladite au moins une forme solide renfermant du borazane stabilisé thermiquement, apte à générer de l'hydrogène par décomposition thermique ; ou
c2) le mélange de ladite au moins une forme solide de borazane, choisie parmi les grains de poudre pulvérulente et/ou les granulés, traitée thermiquement, avec au moins un oxydant inorganique, se présentant sous la forme (de grains) d'une poudre pulvérulente et/ou de granulés ; le mélange résultant, renfermant ladite au moins une forme solide de borazane traitée thermiquement et ledit au moins un oxydant inorganique, constituant alors une forme solide renfermant du borazane stabilisé thermiquement, apte à générer de l'hydrogène par une réaction de combustion auto-entretenue, et la récupération de ladite au moins une forme solide renfermant du borazane stabilisé thermiquement, apte à générer de l'hydrogène par une réaction de combustion auto-entretenue ; ou
c3) le mélange de ladite au moins une forme solide de borazane, choisie parmi les grains de poudre pulvérulente et/ou les granulés, traitée thermiquement, avec au moins un oxydant inorganique, se présentant sous la forme (de grains) d'une poudre pulvérulente et/ou de granulés, suivi de la mise en forme du mélange résultant pour l'obtention de pastilles et/ou blocs renfermant ladite au moins une forme solide de borazane traitée thermiquement et ledit au moins un oxydant ; ledit mélange, mis en forme, renfermant ladite au moins une forme solide de borazane traitée thermiquement et ledit au moins un oxydant inorganique, constituant alors une forme solide renfermant du borazane stabilisé thermiquement, apte à générer de l'hydrogène par une réaction de combustion auto-entretenue, et la récupération de ladite au moins une forme solide renfermant du borazane stabilisé thermiquement, apte à générer de l'hydrogène par une réaction de combustion auto-entretenue.

Selon une première variante, ladite forme solide renfermant du borazane stabilisé thermiquement (récupérée à l'issue du traitement thermique (à l'étape c1)) est donc apte à générer de l'hydrogène par décomposition thermique. Elle est constituée essentiellement dudit borazane stabilisé. On peut qualifier ce type de forme solide de forme solide de première génération.

Selon une seconde variante, ladite forme solide renfermant du borazane stabilisé thermiquement (récupérée après intervention du au moins un oxydant inorganique, à l'issue des étapes c2 ou c3) est donc apte à générer de l'hydrogène par une réaction de combustion auto-entretenue. Elle est constituée essentiellement dudit borazane stabilisé et d'au moins un oxydant inorganique. On peut qualifier ce type de forme solide de forme solide de seconde génération. Ce type de forme solide de seconde génération est obtenu à partir d'au moins une forme solide de première génération (et d'au moins un oxydant inorganique). Les formes solides de seconde génération existent sous forme de mélanges de grains de poudres pulvérulentes, de mélanges de granulés, de mélange de grains de poudre(s) pulvérulente(s) et de granulé(s), de pastilles et/ou blocs.

On note l'analogie avec les formes solides renfermant du borazane de l'art antérieur (voir l'introduction de la présente description), formes solides au sein desquelles ledit borazane n'est pas stabilisé thermiquement.

Selon l'une ou l'autre des variantes de l'invention ci-dessus, le borazane présent dans les formes solides obtenues l'est, stabilisé thermiquement, c'est-à-dire après avoir subi un traitement thermique d'oxydation, c'est-à-dire avec une couche oxydée (de protection) à sa surface.

Le procédé de l'invention comprend donc une première étape de mise à disposition du substrat borazane en cause. Ce substrat - forme solide conventionnelle - est choisi parmi :
- les grains de poudre pulvérulente : de tels grains présentent généralement un diamètre médian (en masse) inférieur ou égal à 500 µm, par exemple d'environ 350 µm,
- les granulés : de tels granulés présentent (logiquement) généralement un diamètre médian (en masse) supérieur à 500 µm, par exemple d'environ 700 µm. Ils ont généralement une masse de quelques milligrammes ;
- les pastilles : de telles pastilles ont généralement une masse de quelques dixièmes de gramme à quelques grammes. Elles présentent généralement un diamètre équivalent de quelques mm (par exemple 5 mm) à 30 mm, pour une épaisseur, constante ou pas, de quelques mm (par exemple 5 mm) à 30 mm. De telles pastilles peuvent être qualifiées de disques lorsqu'elles présentent une faible épaisseur constante (plus particulièrement associée à un large diamètre) ;
- les blocs : de tels blocs monolithes ont généralement une masse de quelques dizaines de grammes à quelques centaines de grammes. Ils présentent généralement un diamètre (équivalent) et une épaisseur(longueur) supérieures à 3 cm. Ils peuvent notamment consister en des blocs substantiellement cylindriques présentant une hauteur de 50 ou 80 mm et un diamètre équivalent de 80 mm, et
- leurs mélanges. Il n'est en effet pas exclu du cadre de l'invention de mettre en oeuvre le traitement thermique sur des substrats de différentes natures (grains de poudre, granulés, pastilles, ou blocs), ou de même nature mais de géométrie et/ou tailles différentes.

En fait, on peut notamment traiter en même temps des blocs et des poudres, tout comme des mélanges de poudres de granulométrie différente, des blocs de forme et/ou dimensions différentes...

On conçoit par ailleurs que le substrat de base puisse exister sous de très nombreuses formes : sphériques, ovoïdes, cylindriques...

On conçoit toutefois que l'on traite plutôt dans le cadre du procédé de l'invention un unique type de substrat (= un ou des substrats de même nature) (sans que ceci soit donc limitatif).

Au(x)dit(s) substrat(s) (solide(s)) borazane, quelles que soient en fait sa(leur) forme(s) et ses(leurs) dimensions exactes, on applique donc, de façon caractéristique, un traitement thermique sous air (= une oxydation) de façon à constituer à sa(leur) surface une couche oxydée (de borate) de protection.

La formation de cette couche oxydée consomme certes du substrat (on a la réaction d'oxydation ci-après mise en oeuvre en surface : 5NH₃BH₃ + 6O₂ → NH₄B₅O₈, 4H₂O + 3H₂ + 4NH₃), et donc de l'hydrogène, mais l'effet de protection recherché peut l'être en minimisant cette consommation.

A propos du traitement thermique à mettre en oeuvre pour la constitution de la couche oxydée recherchée, on peut de façon nullement limitative indiquer ce qui suit.

Ledit traitement thermique est avantageusement mis en oeuvre à la pression atmosphérique. Il n'y a *a priori* guère d'intérêt à alourdir la mise en oeuvre dudit procédé en travaillant à des pressions supérieures à la pression atmosphérique.

Ledit traitement thermique est mis en oeuvre à une température (T) entre 50 et 85°C (50°C ≤ T ≤ 85°C). Ainsi, en un temps raisonnable, le résultat recherché est obtenu (i.e. la couche oxydée recherchée est générée) tout en minimisant la consommation du borazane, la formation de polyaminoborane et la perte d'hydrogène. Ledit traitement thermique est avantageusement mis en oeuvre à une température (T) entre 70 et 85°C (70°C ≤ T ≤ 85°C). On vise ainsi à obtenir une couche protectrice oxydée de faible épaisseur et à optimiser sa formation, notamment en termes de cinétique.

Ledit traitement thermique est mis en oeuvre pendant plusieurs heures, pendant au moins 2 heures, très généralement entre 5 et 25 heures.

Le suivi de la réaction d'oxydation développée à la surface de la forme solide de borazane traitée permet d'optimiser sa mise en oeuvre.

Ledit traitement thermique génère une couche oxydée essentiellement constituée de borate d'ammonium du type B5, c'est-à-dire de borate d'ammonium tétrahydraté de formule NH₄B₅O₈, 4H₂O. Ceci a été confirmé par diffraction aux rayons X (DRX), par spectroscopie infrarouge et aussi par microscopie électronique à balayage couplée à une spectrométrie rayons-X (MEB/EDX).

Ledit traitement thermique est avantageusement mis en oeuvre pour générer une couche oxydée dont la masse représente moins de 10 % de la masse totale de ladite au moins une forme solide de borazane traitée thermiquement, dont la masse représente très avantageusement de 0,2 à 5 % de la masse totale de ladite au moins une forme solide de borazane traitée thermiquement.

On a vu qu'il est nullement opportun de consommer trop de borazane (pour générer une couche oxydée trop épaisse).

Ledit traitement thermique en oxydant la surface de la forme solide de borazane concernée stabilise thermiquement le borazane constitutif de ladite forme. On obtient ainsi les formes solides renfermant du borazane de l'invention de première génération (= formes solides de borazane stabilisé thermiquement).

Comme indiqué ci-dessus, certaines de ces formes solides de première génération - poudres et/ou granulés - peuvent être utilisées pour préparer des formes solides de l'invention de seconde génération les contenant. Ces formes solides de seconde génération consistent 1) en des mélanges de poudres et/ou granulés de première génération et de poudres et/ou granulés d'au moins un oxydant inorganique ou 2) en de tels mélanges mis en forme (sous la forme de pastilles et/ou blocs). Ces formes solides de seconde génération renferment d'une part du borazane stabilisé thermiquement et d'autre part au moins un oxydant inorganique. Elles sont aptes à générer de l'hydrogène par une réaction de combustion auto-entretenue. On note ici que les notions de grains de poudre et de granulés sont les mêmes qu'elles concernent les formes solides de première génération, les oxydants inorganiques ou les formes solides de seconde génération, que les notions de pastilles et de blocs sont les mêmes qu'elles concernent les formes solides de première génération ou les formes solides de seconde génération (voir les précisions données ci-dessus à ce propos).

Pour la mise en oeuvre de cette seconde variante du procédé de l'invention (qui implique donc la mise en oeuvre de la première variante et en sus, l'intervention d'au moins un oxydant inorganique (avec ou sans mise en forme du mélange obtenu)), le au moins un oxydant inorganique utilisé est avantageusement choisi parmi les perchlorates, les dinitroamidures, les nitrates, les oxydes métalliques et leurs mélanges.

Il est très avantageusement choisi parmi le perchlorate d'ammonium, le dinitroamidure d'ammonium, le nitrate de strontium et l'oxyde de fer.

Le nitrate de strontium est particulièrement préféré.

Pour ce qui concerne la mise en forme du mélange de grains de poudre(s) et/ou granulés (pour l'obtention de pastilles et blocs), on préconise vivement la voie sèche.

On rappelle ici la ductilité du borazane, ses propriétés de fluage. Ainsi, il est particulièrement aisé de mettre en forme des mélanges (de grains de poudre et/ou granulés) renfermant du borazane par simple compression.

Selon son deuxième objet, la présente invention concerne, comme indiqué ci-dessus, les formes solides renfermant du borazane stabilisé thermiquement, aptes à générer de l'hydrogène par décomposition thermique ou par une réaction de combustion auto-entretenue, susceptibles d'être obtenues par le procédé décrit ci-dessus.

Lesdites formes solides sont, comme on le conçoit aisément, de première ou seconde génération. Ainsi, il peut s'agir :
- d'une forme solide choisie parmi les grains de poudre pulvérulente de borazane enrobés d'une couche oxydée, les granulés de borazane enrobés d'une couche oxydée, les pastilles de borazane enrobées d'une couche oxydée, les blocs de borazane enrobés d'une couche oxydée, et leurs mélanges, ou
- d'une forme solide choisie parmi les mélanges de grains de poudres pulvérulentes et/ou de granulés, les pastilles et/ou blocs, renfermant des grains de poudre et/ou granulés de borazane enrobés d'une couche oxydée et des grains de poudres et/ou granulés d'au moins un oxydant inorganique.

La couche oxydée, qui entoure les formes solides de première génération (considérées *per se* ou comme élément constitutif de formes solides de seconde génération), est essentiellement constituée de borate d'ammonium du type B5, c'est-à-dire de borate d'ammonium tétrahydraté de formule NH₄B₅O₈, 4H₂O (voir ci-dessus).

Comme indiqué ci-dessus, ladite couche oxydée représente avantageusement moins de 10 % en masse, très avantageusement de 0,2 % à 5 % en masse, de la masse totale des substrats de première génération (desdits grains de poudre pulvérulente, granulés, disques, pastilles et/ou blocs, enrobés de ladite couche oxydée).

Pour ce qui concerne ledit au moins un oxydant inorganique, présent dans les formes solides de la seconde génération, on rappelle qu'il est avantageusement choisi parmi les perchlorates, les dinitroamidures, les nitrates, les oxydes métalliques et leurs mélanges ; qu'il consiste très avantageusement en le perchlorate d'ammonium, le dinitroamidure d'ammonium, le nitrate de strontium ou l'oxyde de fer.

Les formes solides de l'invention de première génération ont une structure de type coquille entourant un coeur, le coeur étant constitué du borazane protégé et la coquille du borate protecteur. Lesdites formes solides ont acquis un caractère "réfractaire" du fait de la présence de ladite coquille.

Selon son troisième objet, la présente invention concerne un procédé de génération d'hydrogène comprenant la décomposition thermique ou la combustion auto-entretenue d'une forme solide renfermant du borazane. De façon caractéristique, la forme solide en cause est une forme solide telle qu'obtenue par le procédé décrit ci-dessus (premier objet de la présente invention) et/ou telle que précisée ci-dessus (second objet de la présente invention). De façon caractéristique, la forme solide en cause renferme du borazane stabilisé thermiquement (avec une couche oxydée de protection en surface). On note ici que la coquille réfractaire protectrice "saute" lors de la décomposition thermique ou de la combustion auto-entretenue de la forme solide. Elle ne constitue en aucune façon un obstacle à l'utilisation "conventionnelle" des formes solides originales de l'invention.

On se propose maintenant de décrire l'invention, de façon nullement limitative, en référence à l'exemple ci-après et aux figures 3 à 7 annexées.

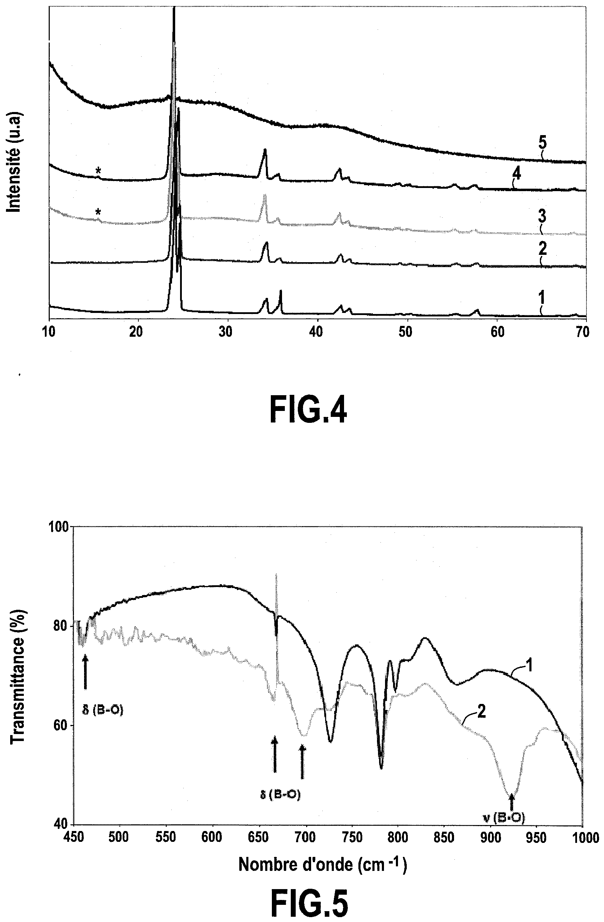

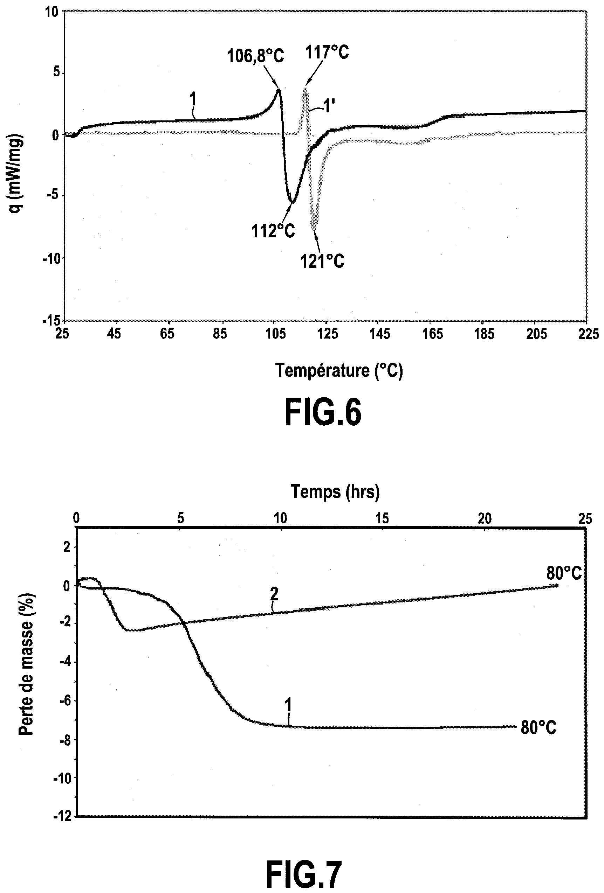

Les figures 1A, 1B, 2 à 7 annexées montrent respectivement :
- pour la figure 1A : la courbe obtenue par thermogravimétrie, mettant en évidence la perte de masse d'un échantillon de borazane (100 mg de poudre, dont le diamètre médian (en masse) des grains est de 350 µm) chauffé à 50°C sous argon ;
- pour la figure 1B : les courbes obtenues par thermogravimétrie, mettant en évidence la perte de masse d'un échantillon de borazane (100 mg de poudre, dont le diamètre médian (en masse) des grains est de 350 µm) chauffé sous argon respectivement à 70°C (courbe 1) et 80°C (courbe 2) ;
- pour la figure 2 : les courbes obtenues par calorimétrie différentielle à balayage (DSC), avec une vitesse de chauffage de 5°C/min sous argon, pour des échantillons de borazane du type ci-dessus (100 mg de poudre, dont le diamètre médian des grains est de 350 µm). La courbe 1 est obtenue avec la poudre de borazane de référence, la courbe 2 est obtenue avec de la poudre du même type après traitement thermique à 70°C pendant 24 h sous argon et la courbe 3 avec de la poudre du même type après traitement thermique à 80°C pendant 24 h sous argon.
   Ces trois figures ont été commentées dans l'introduction du présent texte. Elles mettent en évidence le problème de la stabilité thermique du borazane ;
- pour la figure 3 : les courbes obtenues par thermogravimétrie sur des échantillons de borazane (100 mg de poudre, dont le diamètre médian (en masse) des grains est de 350 µm) soumis à des traitements thermiques, mis en oeuvre sous une atmosphère statique (1 bar) d'air pendant plusieurs heures, à des températures de 80°C, 85°C et 90°C ;
- pour la figure 4 : les diffractogrammes obtenus par diffraction aux rayons X de différents échantillons de même type (100 mg de poudre, dont le diamètre médian (en masse) des grains est de 350 µm), non traité thermiquement (produit de référence) et traités thermiquement sous air à la pression atmosphérique dans différentes conditions de température. La courbe 1 est obtenue avec le borazane de départ (de référence) ; la courbe 2 est obtenue avec le borazane traité thermiquement sous air à 80°C pendant 20 heures, la courbe 3 avec le borazane traité thermiquement sous air à 80°C pendant 65 heures, la courbe 4 avec le borazane traité thermiquement sous air à 85°C pendant 20 heures, la courbe 5 avec le borazane traité thermiquement sous air à 90°C pendant 20 heures ;
- pour la figure 5 : des spectres infrarouges d'un échantillon de borazane (100 mg de poudre, dont le diamètre médian (en masse) des grains est de 350 µm) non traité thermiquement (courbe 1) et de l'échantillon après traitement sous air, à la pression atmosphérique, à 80°C pendant 20 heures (courbe 2) ;
- pour la figure 6 : les courbes obtenues par calorimétrie différentielle à balayage (DSC), avec une vitesse de chauffage de 5°C/min sous argon, avec un échantillon de borazane de départ (100 mg de poudre, dont le diamètre médian (en masse) est de 350 µm) (courbe 1 correspondant à la courbe 1 de la figure 2) et un échantillon du même type traité thermiquement à 80°C, sous air, à la pression atmosphérique, pendant 65 heures (courbe 1') ;
- pour la figure 7 : les courbes obtenues par thermogravimétrie avec un échantillon de borazane de départ (100 mg de poudre, dont le diamètre médian (en masse) est de 350 µm) chauffé sous argon à 80°C (courbe 1 correspondant à la courbe 2 de la figure 1B) et un échantillon de même type, traité thermiquement selon l'invention (traitement sous air à la pression atmosphérique à 80°C pendant 20 heures), chauffé de la même façon, sous argon à 80°C (courbe 2).

Les figures 3 à 7, illustrant l'invention, sont commentées ci-après, en référence à l'exemple.

### Exemple

Le produit de départ (référence) utilisé est de la poudre de borazane. Ses grains ont un diamètre médian (en masse) de 350 µm.

Des échantillons (100 mg) de ladite poudre ont été traités thermiquement selon l'invention, dans les conditions ci-après : sous air, à la pression atmosphérique, à des températures de 80, 85 et 90°C, pendant plusieurs heures.

Le traitement thermique a été mis en oeuvre dans un four statique.

Les résultats obtenus sont montrés sur les figures 3 à 7 annexés ainsi que dans le tableau 2 ci-après.
• Les courbes de la figure 3 montrent l'augmentation de la masse du borazane traité sous air à 80, 85 et 90°C. On conçoit que la mise en oeuvre du traitement thermique à 90°C est loin d'être optimisée, en référence au compromis effet de protection recherchée/consommation d'hydrogène impliquée dans la formation de la couche protectrice de borate. La couche de borate générée à 90°C est de loin trop importante, dès 10 heures de traitement.
Les chiffres du tableau 2 ci-après montrent cette augmentation de la masse du borazane traité à 80°C. Dans la dernière colonne dudit tableau 2, l'augmentation de masse a été traduite en masse théorique de borazane oxydé (% massique de borazane transformée en borate d'ammonium de type B5).

**Tableau 2**

| Temps (heure) | Gain de masse sous air (%) | Borazane oxydé (%) |
|---|---|---|
| 5 | 0,05 | 0,18 |
| 10 | 0,12 | 0,43 |
| 15 | 0,5 | 1,78 |
| 20 | 0,9 | 3,20 |

• A propos des diffractogrammes montrés sur la figure 4, on peut formuler les commentaires ci-après.

Ceux obtenus avec les échantillons chauffés à 80°C sous air (pendant 20 h (courbe 2) et pendant 65 h (courbe 3)) et à 85°C sous air (pendant 20 h (courbe 4)) restent identiques à celui du produit de référence (borazane non traité) (courbe 1). Le borazane traité dans ces conditions n'a pas été substantiellement décomposé. Par contre, le borazane traité à 90°C (pendant 20 h) a été substantiellement décomposé en polyaminoborane (amorphe). La courbe 5 traduit cette décomposition. Par ailleurs, la présence de borate du type B5 est confirmée sur ladite figure 4 au niveau de l'astérisque (courbes 3 et 4).

Une analyse dispersée en énergie (EDX) (qui a permis de réaliser une cartographie en numéro atomique de la surface des échantillons traités) a confirmé la présence d'une couche en surface, avec un rapport bore/azote significativement supérieur à celui du borazane de départ. Cette évolution du nombre d'atomes d'azote à la surface des échantillons traités thermiquement selon l'invention confirme le dégagement de NH₃ et l'oxydation de surface suivant la réaction : 5NH₃BH₃ + 6O₂ → NH₄B₅O₈, 4H₂O + 3H₂ + 4NH₃.
- La courbe 2 de la figure 5 confirme la formation de borates.
   On retrouve sur cette courbe 2 les vibrations des liaisons du borazane (voir la courbe 1 de cette figure) et en sus, des vibrations des liaisons B-O du borate formé (après le chauffage à 80°C sous air pendant 20 heures).
- Les courbes DSC de la figure 6 confirment la stabilité thermique du borazane traité thermiquement selon l'invention sous air à 80°C pendant une durée de 65 heures. En effet, le pic de fusion endothermique du borazane est toujours clairement visible sur la courbe 1'. On peut noter que la fusion de l'échantillon traité sous air (dont les grains ont donc été recouverts de borate) se produit à une température plus élevée (ce qui est fort logique) que celle du borazane de référence. La différence est d'environ 10°C (117°C - 106,8°C).

De la même façon, la température de première décomposition est décalée (de 112°C vers 121°C). Le borazane traité est devenu plus réfractaire.
- On a confirmé sur la figure 7 que le traitement thermique selon l'invention rend le borazane plus stable thermiquement.

Les échantillons testés sous argon sont :
- un échantillon de référence (poudre telle que caractérisée plus haut) : la courbe 1 montre l'instabilité thermique de celui-ci ; et
- un échantillon du même type traité thermiquement selon l'invention (sous air à 80°C pendant 20 heures) : la courbe 2 montre que ledit échantillon est beaucoup plus stable. La couche de borate protège le borazane à coeur.

## Revendications

1. Procédé d'obtention d'une forme solide renfermant du borazane stabilisé thermiquement, ladite forme solide étant apte à générer de l'hydrogène par décomposition thermique ou par une réaction de combustion auto-entretenue, ledit procédé comprenant :
a) la mise à disposition d'au moins une forme solide de borazane choisi parmi les grains de poudre pulvérulente, les granulés, les pastilles, les blocs et leurs mélanges,
b) le traitement thermique de ladite au moins une forme solide de borazane, sous air, à une température comprise entre 50 et 85°C, pendant au moins deux heures, ledit traitement thermique générant une couche oxydée à sa surface ; ladite au moins une forme solide de borazane traitée thermiquement constituant alors une forme solide renfermant du borazane stabilisé thermiquement, apte à générer de l'hydrogène par décomposition thermique ; et
c1) la récupération de ladite au moins une forme solide renfermant du borazane stabilisé thermiquement, apte à générer de l'hydrogène par décomposition thermique ; ou
c2) le mélange de ladite au moins une forme solide de borazane, choisie parmi les grains de poudre pulvérulente et/ou les granulés, traitée thermiquement, avec au moins un oxydant inorganique, se présentant sous la forme d'une poudre pulvérulente et/ou de granulés ; le mélange résultant, renfermant ladite au moins une forme solide de borazane traitée thermiquement et ledit au moins un oxydant inorganique, constituant alors une forme solide renfermant du borazane stabilisé thermiquement, apte à générer de l'hydrogène par une réaction de combustion auto-entretenue, et la récupération de ladite au moins une forme solide renfermant du borazane stabilisé thermiquement, apte à générer de l'hydrogène par une réaction de combustion auto-entretenue ; ou
c3) le mélange de ladite au moins une forme solide de borazane, choisie parmi les grains de poudre pulvérulente et/ou les granulés, traitée thermiquement, avec au moins un oxydant inorganique, se présentant sous la forme d'une poudre pulvérulente et/ou de granulés, suivi de la mise en forme du mélange résultant pour l'obtention de pastilles et/ou blocs renfermant ladite au moins une forme solide de borazane traitée thermiquement et ledit au moins un oxydant ; ledit mélange, mis en forme, renfermant ladite au moins une forme solide de borazane traitée thermiquement et ledit au moins un oxydant inorganique, constituant alors une forme solide renfermant du borazane stabilisé thermiquement, apte à générer de l'hydrogène par une réaction de combustion auto-entretenue, et la récupération de ladite au moins une forme solide renfermant du borazane stabilisé thermiquement, apte à générer de l'hydrogène par une réaction de combustion auto-entretenue.

2. Procédé selon la revendication 1, dans lequel ledit traitement thermique est mis en oeuvre à la pression atmosphérique.

3. Procédé selon la revendication 1 ou 2, dans lequel ledit traitement thermique est mis en oeuvre à une température entre 70 et 85°C.

4. Procédé selon l'une quelconque des revendications 1 à 3, dans lequel ledit traitement thermique est mis en oeuvre entre 5 et 25 heures.

5. Procédé selon l'une quelconque des revendications 1 à 4, dans lequel ladite couche oxydée est essentiellement constituée de borate d'ammonium du type B5, c'est-à-dire de borate d'ammonium tétrahydraté de formule NH₄B₅O₈, 4H₂O.

6. Procédé selon l'une quelconque des revendications 1 à 5, dans lequel ladite couche oxydée a une masse qui représente moins de 10 % de la masse totale de ladite au moins une forme solide de borazane traitée thermiquement.

7. Procédé selon l'une quelconque des revendications 1 à 6, dans lequel ladite couche oxydée a une masse qui représente de 0,2 à 5 % de la masse totale de ladite au moins une forme solide de borazane traitée thermiquement.

8. Procédé selon l'une quelconque des revendications 1 à 7, comprenant l'opération de mélange, ledit au moins un oxydant inorganique étant choisi parmi les perchlorates, les dinitroamidures, les nitrates, les oxydes métalliques et leurs mélanges, avantageusement parmi le perchlorate d'ammonium, le dinitroamidure d'ammonium, le nitrate de strontium et l'oxyde de fer.

9. Procédé selon l'une quelconque des revendications 1 à 8, comprenant l'opération de mélange et celle de mise en forme, ladite mise en forme étant mise en oeuvre par voie sèche.

10. Forme solide renfermant du borazane stabilisé thermiquement, apte à générer de l'hydrogène par décomposition thermique ou par une réaction de combustion auto-entretenue, susceptible d'être obtenue par le procédé selon l'une quelconque des revendications 1 à 9.

11. Forme solide selon la revendication 10, choisie parmi :
- les grains de poudre pulvérulente de borazane enrobés d'une couche oxydée, les granulés de borazane enrobés d'une couche oxydée, les pastilles de borazane enrobées d'une couche oxydée, les blocs de borazane enrobés d'une couche oxydée et leurs mélanges, et
- les mélanges de grains de poudres pulvérulentes et/ou de granulés, les pastilles et/ou blocs, renfermant des grains de poudre et/ou granulés de borazane enrobés d'une couche oxydée et des grains de poudres et/ou granulés d'au moins un oxydant inorganique.

12. Forme solide selon la revendication 11, ladite couche oxydée étant essentiellement constituée de borate d'ammonium du type B5, c'est-à-dire de borate d'ammonium tétrahydraté de formule NH₄B₅O₈, 4H₂O.

13. Forme solide selon la revendication 11 ou 12, ladite couche oxydée représentant moins de 10 % en masse, avantageusement de 0,2 % à 5 % en masse, de la masse totale desdits grains de poudre pulvérulente, granulés, disques, pastilles et/ou blocs, enrobés de ladite couche oxydée.

14. Forme solide selon l'une quelconque des revendications 11 à 13, ledit au moins un oxydant inorganique étant choisi parmi les perchlorates, les dinitroamidures, les nitrates et les oxydes métalliques et leurs mélanges ; avantageusement parmi le perchlorate d'ammonium, le dinitroamidure d'ammonium, le nitrate de strontium et l'oxyde de fer.

15. Procédé de génération d'hydrogène comprenant la décomposition thermique ou la combustion auto-entretenue d'une forme solide renfermant du borazane, **caractérisé en ce que** ladite forme solide renfermant du borazane est une forme solide selon l'une quelconque des revendications 10 à 14 et/ou est obtenue selon le procédé de l'une quelconque des revendications 1 à 9.

## Patentansprüche

1. Verfahren zur Herstellung einer festen Form, die thermisch stabilisiertes Borazan enthält, wobei die feste Form in der Lage ist, Wasserstoff durch thermische Zersetzung oder eine sich selbst erhaltende Verbrennungsreaktion zu erzeugen, wobei das Verfahren umfasst:
a) Bereitstellen von mindestens einer festen Form von Borazan, ausgewählt aus Pulvermehl-Körnern, Granulaten, Pellets, Blöcken und Mischungen derselben,
b) Wärmebehandeln der mindestens einen festen Form von Borazan unter Luft bei einer Temperatur zwischen 50 und 85°C für mindestens zwei Stunden, wobei die Wärmebehandlung eine oxidierte Schicht auf ihrer Oberfläche erzeugt, wobei die mindestens eine wärmebehandelte feste Form von Borazan dann eine feste Form darstellt, die thermisch stabilisiertes Borazan enthält und in der Lage ist, Wasserstoff durch thermische Zersetzung zu erzeugen, und
c1) Rückgewinnen der mindestens einen festen Form, die thermisch stabilisiertes Borazan enthält und in der Lage ist, Wasserstoff durch thermische Zersetzung zu erzeugen, oder
c2) Mischen der mindestens einen wärmebehandelten festen Form von Borazan, ausgewählt aus Pulvermehl-Körnern und/oder Granulaten, mit mindestens einem anorganischen Oxidationsmittel in Form von Pulvermehl und/oder Granulat, wobei das resultierende Gemisch, das die mindestens eine wärmebehandelte feste Form von Borazan und das mindestens eine anorganische Oxidationsmittel enthält, dann eine feste Form darstellt, die thermisch stabilisiertes Borazan enthält und in der Lage ist, Wasserstoff durch eine sich selbst erhaltende Verbrennungsreaktion zu erzeugen, und die mindestens eine feste Form, die thermisch stabilisiertes Borazan enthält und in der Lage ist, Wasserstoff durch eine sich selbst erhaltende Verbrennungsreaktion zu erzeugen, wiedergewonnen wird, oder
c3) Mischen der mindestens einen wärmebehandelten festen Form von Borazan, ausgewählt aus Pulvermehl-Körnern und/oder Granulaten mit mindestens einem anorganischen Oxidationsmittel in Form von Pulvermehl und/oder Granulat, gefolgt von der Formgebung des resultierenden Gemischs, um Pellets und/oder Blöcke zu erhalten, die die mindestens eine wärmebehandelte feste Form von Borazan und das mindestens eine Oxidationsmittel enthalten, wobei das geformte Gemisch, das die mindestens eine wärmebehandelte feste Form von Borazan und das mindestens eine anorganische Oxidationsmittel enthält, dann eine feste Form darstellt, die thermisch stabilisiertes Borazan enthält und in der Lage ist, Wasserstoff durch eine sich selbst erhaltende Verbrennungsreaktion zu erzeugen, und die mindestens eine feste Form, die thermisch stabilisiertes Borazan enthält und in der Lage ist, Wasserstoff durch eine sich selbst erhaltende Verbrennungsreaktion zu erzeugen, wiedergewonnen wird.

2. Verfahren gemäß Anspruch 1, wobei die Wärmebehandlung bei Atmosphärendruck durchgeführt wird.

3. Verfahren gemäß Anspruch 1 oder 2, wobei die Wärmebehandlung bei einer Temperatur zwischen 70 und 85°C durchgeführt wird.

4. Verfahren gemäß einem der Ansprüche 1 bis 3, wobei die Wärmebehandlung zwischen 5 und 25 Stunden lang durchgeführt wird.

5. Verfahren gemäß einem der Ansprüche 1 bis 4, wobei die oxidierte Schicht im Wesentlichen aus Ammoniumborat vom Typ B5, d. h. Ammoniumborattetrahydrat der Formel NH₄B₅O₈, 4H₂O, besteht.

6. Verfahren gemäß einem der Ansprüche 1 bis 5, wobei die oxidierte Schicht eine Masse aufweist, die weniger als 10 % der Gesamtmasse der mindestens einen wärmebehandelten festen Form von Borazan darstellt.

7. Verfahren gemäß einem der Ansprüche 1 bis 6, wobei die oxidierte Schicht eine Masse aufweist, die 0,2 bis 5 % der Gesamtmasse der mindestens einen wärmebehandelten festen Form von Borazan darstellt.

8. Verfahren gemäß einem der Ansprüche 1 bis 7, umfassend den Vorgang des Mischens, wobei das mindestens eine anorganische Oxidationsmittel ausgewählt ist aus Perchloraten, Dinitramiden, Nitraten, Metalloxiden und Gemischen davon, bevorzugt aus Ammoniumperchlorat, Ammoniumdinitramidid, Strontiumnitrat und Eisenoxid.

9. Verfahren gemäß einem der Ansprüche 1 bis 8, umfassend den Vorgang des Mischens und Formgebens, wobei die Formgebung im Trockenverfahren durchgeführt wird.

10. Feste Form, die thermisch stabilisiertes Borazan enthält und in der Lage ist, Wasserstoff durch thermische Zersetzung oder eine sich selbst erhaltende Verbrennungsreaktion zu erzeugen, erhältlich durch das Verfahren gemäß einem der Ansprüche 1 bis 9.

11. Feste Form gemäß Anspruch 10, ausgewählt aus:
- Borazan-Pulvermehl-Körnern, die mit einer oxidierten Schicht überzogen sind, Borazan-Granulaten, die mit einer oxidierten Schicht überzogen sind, Borazan-Pellets, die mit einer oxidierten Schicht überzogen sind, Borazan-Blöcken, die mit einer oxidierten Schicht überzogen sind, und Mischungen daraus, und
- Mischungen aus Pulvermehl-Körnern und/oder Granulaten, Pellets und/oder Blöcken, die Pulver-Körner und/oder Granulate von Borazan enthalten, die mit einer oxidierten Schicht überzogen sind, und Pulver-Körnern und/oder Granulate von mindestens einem anorganischen Oxidationsmittel.

12. Feste Form gemäß Anspruch 11, wobei die oxidierte Schicht im Wesentlichen aus Ammoniumborat vom Typ B5, d. h. Ammoniumborattetrahydrat der Formel NH₄B₅O₈, 4H₂O, besteht.

13. Feste Form gemäß Anspruch 11 oder 12, wobei die oxidierte Schicht weniger als 10 Masse-%, bevorzugt 0,2 bis 5 Masse-% der Gesamtmasse der Pulvermehl-Körner, Granulate, Scheiben, Pellets und/oder Blöcke, die mit der oxidierten Schicht überzogen sind, ausmacht.

14. Feste Form gemäß einem der Ansprüche 11 bis 13, wobei das mindestens eine anorganische Oxidationsmittel ausgewählt ist aus Perchloraten, Dinitramiden, Nitraten, Metalloxiden und Gemischen davon, bevorzugt aus Ammoniumperchlorat, Ammoniumdinitramid, Strontiumnitrat und Eisenoxid.

15. Verfahren zur Erzeugung von Wasserstoff, umfassend die thermische Zersetzung oder die sich selbst erhaltende Verbrennung einer borazanhaltigen festen Form, **dadurch gekennzeichnet, dass** die borazanhaltige feste Form eine feste Form gemäß einem der Ansprüche 10 bis 14 ist und/oder durch das Verfahren gemäß einem der Ansprüche 1 bis 9 erhalten wird.

## Claims

1. A process for obtaining a solid form containing heat-stabilized borazane, said solid form being capable of generating hydrogen by thermal decomposition or by a self-sustaining combustion reaction, said process comprising:
a) making available at least one solid form of borazane chosen from grains of pulverulent powder, granules, pellets, blocks, and mixtures thereof,
b) heat treating said at least one solid form of borazane, in air, at a temperature of between 50 and 85°C during at least two hours, the heat treatment generating an oxidized layer at its surface; said at least one heat-treated solid form of borazane then constituting a solid form containing heat-stabilized borazane, which is capable of generating hydrogen by thermal decomposition; and
c1) recovering said at least one solid form containing heat-stabilized borazane, which is capable of generating hydrogen by thermal decomposition; or
c2) mixing said at least one solid form of borazane, chosen from grains of pulverulent powder and/or granules, heat-treated, with at least one inorganic oxidizing agent, which is in the form of a pulverulent powder and/or of granules; the resulting mixture, containing said at least one heat-treated solid form of borazane and said at least one inorganic oxidizing agent, then constituting a solid form containing heat-stabilized borazane, which is capable of generating hydrogen by a self-sustaining combustion reaction, and recovering said at least one solid form containing heat-stabilized borazane, which is capable of generating hydrogen by a self-sustaining combustion reaction; or
c3) mixing said at least one solid form of borazane, chosen from grains of pulverulent powder and/or granules, heat-treated, with at least one inorganic oxidizing agent, which is in the form of a pulverulent powder and/or of granules, followed by forming the resulting mixture to obtain pellets and/or blocks containing said at least one heat-treated solid form of borazane and said at least one oxidizing agent; said formed mixture containing said at least one heat-treated solid form of borazane and said at least one inorganic oxidizing agent then constituting a solid form containing heat-stabilized borazane, which is capable of generating hydrogen by a self-sustaining combustion reaction, and the recovery of said at least one solid form containing heat-stabilized borazane, which is capable of generating hydrogen by a self-sustaining combustion reaction.

2. The process as claimed in claim 1, in which said heat treatment is performed at atmospheric pressure.

3. The process as claimed in claim 1 or 2, in which said heat treatment is performed at a temperature of between 70 and 85°C.

4. The process as claimed in any one of claims 1 to 3, in which said heat treatment is performed between 5 and 25 hours.

5. The process as claimed in any one of claims 1 to 4, in which said oxidized layer consists essentially of ammonium borate of the type B5, i.e. tetrahydrated ammonium borate of formula NH₄B₅O₈·4H₂O.

6. The process as claimed in any one of claims 1 to 5, in which said oxidized layer has a weight which represents less than 10% of the total weight of said at least one heat-treated solid form of borazane.

7. The process as claimed in any one of claims 1 to 6, in which said oxidized layer has a weight which represents from 0.2% to 5% of the total weight of said at least one heat-treated solid form of borazane.

8. The process as claimed in any one of claims 1 to 7, comprising the mixing step, said at least one inorganic oxidizing agent being chosen from perchlorates, dinitramides, nitrates, metal oxides, and mixtures thereof, advantageously from ammonium perchlorate, ammonium dinitramide, strontium nitrate and iron oxide.

9. The process as claimed in any one of claims 1 to 8, comprising the mixing step and the forming step, said forming being performed via a dry route.

10. A solid form containing heat-stabilized borazane, which is capable of generating hydrogen by thermal decomposition or by a self-sustaining combustion reaction, able to be obtained via the process as claimed in any one of claims 1 to 9.

11. The solid form as claimed in claim 10, chosen from:
- grains of pulverulent borazane powder coated with an oxidized layer, borazane granules coated with an oxidized layer, borazane pellets coated with an oxidized layer, borazane blocks coated with an oxidized layer, and mixtures thereof, and
- mixtures of grains of pulverulent powders and/or of granules, pellets and/or blocks, containing grains of powder and/or of granules of borazane coated with an oxidized layer and grains of powders and/or granules of at least one inorganic oxidizing agent.

12. The solid form as claimed in claim 11, said oxidized layer consisting essentially of ammonium borate of the type B5, i.e. tetrahydrated ammonium borate of formula NH₄B₅O₈·4H₂O.

13. The solid form as claimed in claim 11 or 12, said oxidized layer representing less than 10% by weight, advantageously from 0.2% to 5% by weight, of the total weight of said grains of pulverulent powder, granules, disks, pellets and/or blocks, coated with said oxidized layer.

14. The solid form as claimed in any one of claims 11 to 13, said at least one inorganic oxidizing agent being chosen from perchlorates, dinitramides, nitrates, metal oxides, and mixtures thereof; advantageously from ammonium perchlorate, ammonium dinitramide, strontium nitrate and iron oxide.

15. A process for generating hydrogen, comprising the thermal decomposition or the self-sustaining combustion of a solid form containing borazane, **characterized in that** said solid form containing borazane is a solid form as claimed in any one of claims 10 to 14 and/or is obtained according to the process of any one of claims 1 to 9.
